(19) Europäisches Patentamt
European Patent Office
Office européen des brevets

(11) **EP 3 890 218 A1**

(12) **EUROPEAN PATENT APPLICATION**
published in accordance with Art. 153(4) EPC

(43) Date of publication:
06.10.2021 Bulletin 2021/40

(51) Int Cl.:
$H04J\ 3/06^{(2006.01)}$ $\quad H04J\ 14/02^{(2006.01)}$
$H04L\ 7/00^{(2006.01)}$

(21) Application number: 19889817.3

(22) Date of filing: 28.10.2019

(86) International application number:
PCT/CN2019/113735

(87) International publication number:
WO 2020/108202 (04.06.2020 Gazette 2020/23)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 28.11.2018 CN 201811437249

(71) Applicant: ZTE Corporation
Shenzhen, Guangdong 518057 (CN)

(72) Inventors:
• WANG, Linlin
  Shenzhen, Guangdong 518057 (CN)
• HE, Li
  Shenzhen, Guangdong 518057 (CN)
• YOU, Jun
  Shenzhen, Guangdong 518057 (CN)

(74) Representative: Pennacchio, Salvatore Giovanni
et al
Jacobacci & Partners S.p.A.
Via Senato, 8
20121 Milano (IT)

(54) **TIMESTAMP ACQUISITION METHOD AND TIME SYNCHRONIZATION SYSTEM**

(57) Provided is a timestamp acquisition method and a time synchronization system. The method includes that: a first device sets a first tag for a first packet to be sent to a second device; and in a case where the first tag is detected at a Physical Coding Sublayer (PCS) layer of the first device, a current time T1 is acquired as a sending timestamp at which the first packet is sent. By virtue of the technical solution, the position where a timestamp of the first packet is provided is lowered into the PCS layer, and timestamp processing is performed at the PCS layer, thereby greatly reducing uncertain subsequent time delays. The solution can solve the problem of low accuracy of a timestamp determination scheme in the related art, greatly improve the accuracy of timestamp processing, and improve the time synchronization accu- racy of the system.

**Fig. 6**

A first device sets a first tag for a first packet to be sent to a second device — S602

In a case where the first tag is detected at a PCS layer of the first device, a current time T1 is acquired as a sending timestamp at which the first packet is sent — S604

## Description

## Technical Field

The present disclosure relates to the field of communications, and in particular to a timestamp acquisition method and a time synchronization system.

## Background

In a related art, a time transfer technology has long been applied in bearer networks. Since the first version of the 1588V2 standard in 2008, a bearing device has been able to support the time transfer technology. However, because the previous standards do not require high accuracy of time transfer, the time transfer technology of the bearer network has not been widely applied.

After the 5th-generation mobile communication system (5G) technology is applied, the high-accuracy time transfer becomes a new mainstream demand in a bearer network system. In recent years, some high-accuracy time transfer technology schemes have been introduced, which enables the time transfer technology of the bearer network to be widely applied. A variety of methods can be used to improve the time accuracy of the bearing device. Compared with the general high accuracy, a significant change in the high accuracy is that the layer in which a timestamp is provided is as close to a physical (PHY) layer as possible to reduce a time delay caused by jitter in the device, thereby improving the accuracy of the timestamp. But how to increase the accuracy, different manufacturers put forward different technical solutions.

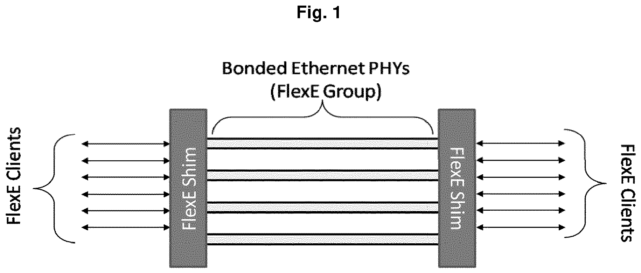

FlexE, which refers to the Flex Ethernet technology, aims to separate an ETH service from a physical channel by adding a FlexE Shim layer between a Media Access Control (MAC) layer and a Physical Coding Sublayer (PCS) layer of the traditional ETH. Fig. 1 is a schematic diagram of a relationship among various parts of FlexE according to the related art. As shown in Fig. 1, FlexE Group includes 1 to n Ethernet PHYs; FlexE Clients correspond to a service flow, and FlexE Shim realizes a mapping/demapping function between the FlexE Clients and the FlexE Group, so that the rate of the Client no longer needs to correspond to the rate of the PHY.

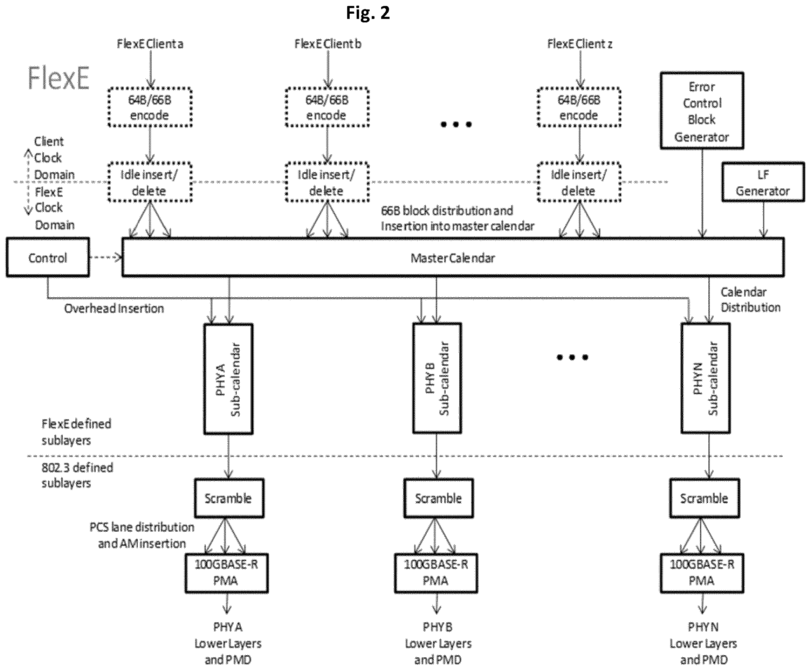

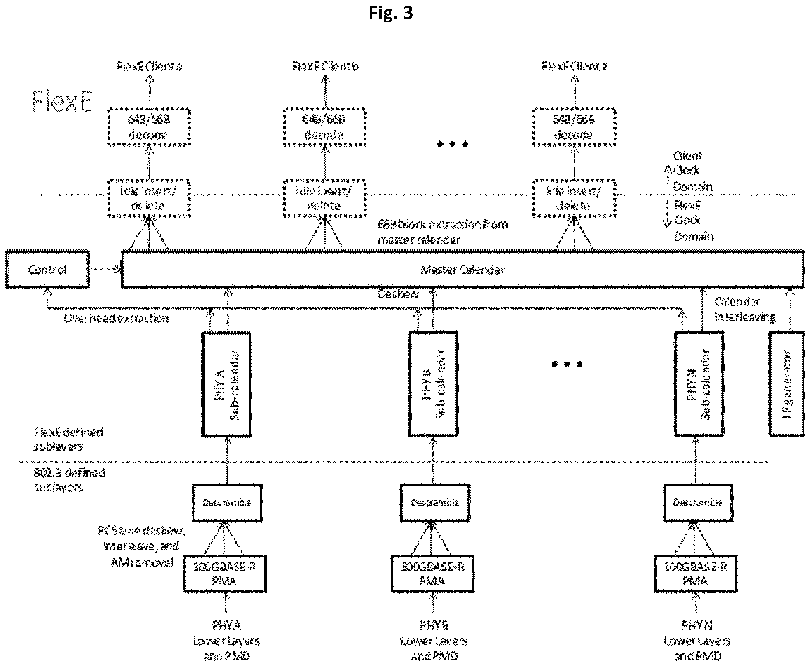

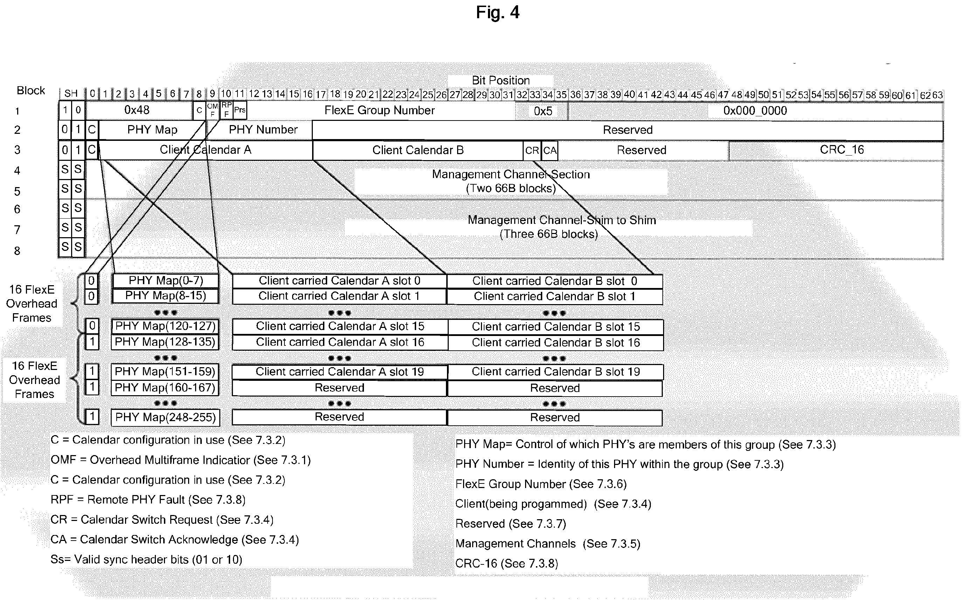

Fig. 2 is a structure diagram of FlexE multiplexing according to the related art. Fig. 3 is a structure diagram of FlexE demultiplexing according to the related art. The relationship between an ETH hierarchy and a FlexE hierarchy is shown in Fig. 2 and Fig. 3. The 64/66bit encoding, Idle frame insertion, Overhead insertion and PHY distribution are performed at the FlexE Shim layer, and scrambling/lane distribution and AM code insertion are performed at the PCS layer. The overhead inserted at the FlexE layer is used to carry control information. Fig. 4 is a schematic diagram of a FlexE overhead structure according to the related art. As shown in Fig. 4, the FlexE overhead structure is composed of an 8*66bit multi-frame structure, the last five 66bit blocks of which are used to store a variety of management information.

There is no effective solution to the problem of low accuracy of a timestamp determination scheme in the related art.

## Summary

Embodiments of the present disclosure provide a timestamp acquisition method and a time synchronization system, which may at least solve the problem of low accuracy of a timestamp determination scheme in the related art.

According to some embodiments of the present disclosure, a timestamp acquisition method is provided, which may include that: a first device sets a first tag for a first packet to be sent to a second device; and in a case where the first tag is detected at a PCS layer of the first device, a current time T1 is acquired as a sending timestamp at which the first packet is sent.

According to some other embodiments of the present disclosure, a second device receives a first packet sent by a first device, wherein the first packet is in a FlexE overhead block format; a time T2 at which a PCS layer of the second device receives a first 66bit of a first overhead block of the first packet is recorded, and the time T2 is determined as a receiving timestamp at which the first packet is received.

According to some other embodiments of the present disclosure, a time synchronization system is provided, which may include a first device and a second device. The first device is configured to set a first tag for a first packet to be sent to the second device; and in a case where the first tag is detected at a PCS layer of the first device, determine a current time t1 and feed back the time t1 to the second device. The second device is configured to receive the first packet sent by the first device, and determine a time t2 at which the first packet is received. The second device is configured to set a second tag for a second packet to be sent to the first device, and in a case where the second tag is detected at a PCS layer of the second device, determine a current time t3. The first device is configured to receive the second packet, determine a time t4 at which the second packet is received and feed back the time t4 to the second device. The second device is configured to perform time synchronization according to the time t1, the time t2, the time t3 and the time t4.

According to still other embodiments of the present disclosure, a storage medium is provided. The storage medium stores a computer program. The computer program is configured to execute, at runtime, operations in any of the above method embodiments.

According to still other embodiments of the present disclosure, an electronic device is provided, which includes a memory and a processor. The memory stores a computer program. The processor is configured to run the computer program, so as to perform operations in any of the above method embodiments.

Through the embodiments of the present disclosure, the first device sets a first tag for a first packet to be sent to the second device; and in a case where the first tag is detected at a PCS layer of the first device, the current time T1 is acquired as the sending timestamp at which the first packet is sent. By virtue of the technical solution, the position where a timestamp of the first packet is provided is lowered into the PCS layer, and timestamp processing is performed at the PCS layer, thereby greatly reducing uncertain subsequent time delays. The solution can solve the problem of low accuracy of a timestamp determination scheme in the related art, greatly improve the accuracy of timestamp processing, and improve the time synchronization accuracy of the system.

## Brief Description of the Drawings

The accompanying drawings described herein are used to provide a deeper understanding of the present disclosure, and constitute a part of the present application. The exemplary embodiments of the present disclosure and the description thereof are used to explain the present disclosure. The drawings and the exemplary embodiment do not constitute limitations to the present disclosure. In the drawings:

Fig. 1 is a schematic diagram of a relationship among various parts of FlexE according to the related art;

Fig. 2 is a structure diagram of FlexE multiplexing according to the related art;

Fig. 3 is a structure diagram of FlexE demultiplexing according to the related art;

Fig. 4 is a schematic diagram of a FlexE overhead structure according to the related art;

Fig. 5 is a structural block diagram of hardware of a communication device for implementing a timestamp acquisition method according to some embodiments of the present disclosure;

Fig. 6 is a flowchart of a timestamp acquisition method according to some embodiments of the present disclosure;

Fig. 7 is a structure diagram of a sending system and a receiving system according to some embodiments of the present disclosure; and

Fig. 8 is a time information interaction diagram of E2E according to some embodiments of the present disclosure.

## Detailed Description

The present disclosure is described below in detail with reference to the drawings and in conjunction with the embodiments. It is to be noted that embodiments in the present application and characteristics in the embodiments may be combined to derive other embodiments not explicitly described.

It is to be noted that the terms "first", "second" and the like in the specification, the claims and the drawings of the present disclosure are used to distinguish similar objects, and are not used to describe a specific sequence or a precedence order.

First embodiment

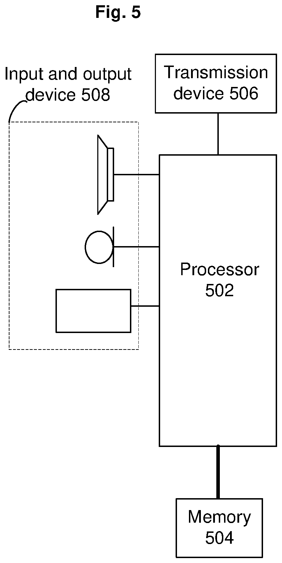

A method embodiment provided in the first embodiment may be performed in a communication device or similar computing devices. Taking that the method runs on a communication device as an example, Fig. 5 is a structural block diagram of hardware of a communication device for implementing a timestamp acquisition method according to some embodiments of the present disclosure. As shown in Fig. 5, the communication device 50 may include one or more (only one is shown in Fig. 5) processors 502 (the processor 502 may include, but be not limited to, a processing device such as a Micro Processor Unit (MCU) or a Field Programmable Gate Array (FPGA)) and a memory 504 for storing data. In some exemplary implementations, the communication device may further include a transmission device 506 for implementing a communication function and an input and output device 508. Those having ordinary skill in the art should know that the structure shown in Fig. 5 is only schematic and is not intended to limit the structure of the communication device. For example, the communication device 50 may further include more or fewer components than the components shown in Fig. 5, or has a configuration different from that shown in Fig. 5.

The memory 504 may be configured to store a software program of application software and a module, for example, a program instruction/module corresponding to a time synchronization method in the embodiments of the present disclosure. The processor 502 runs the software program and module stored in the memory 504, thereby executing various functional applications and data processing, namely implementing the above-mentioned method. The memory 504 may include a high-speed random access memory and may also include a nonvolatile memory, for example, one or more magnetic storage devices, flash memories or other nonvolatile solid-state memories. In some examples, the memory 504 may further include a memory arranged remotely relative to the processor 502 and the remote memory may be connected to the communication device 50 through a network. An example of the network includes, but is not limited to, the Internet, an Intranet, a local area network, a mobile communication network and a combination thereof.

The transmission device 506 is configured to receive or send data through a network. A specific example of the network may include a wireless network provided by a communication provider of the communication device 50. In an example, the transmission device 506 includes a Network Interface Controller (NIC), which may be connected with another network device through a base station, thereby communicating with the Internet. In an example, the transmission device 506 may be a Radio Frequency (RF) module, which is configured to communicate with the Internet wirelessly.

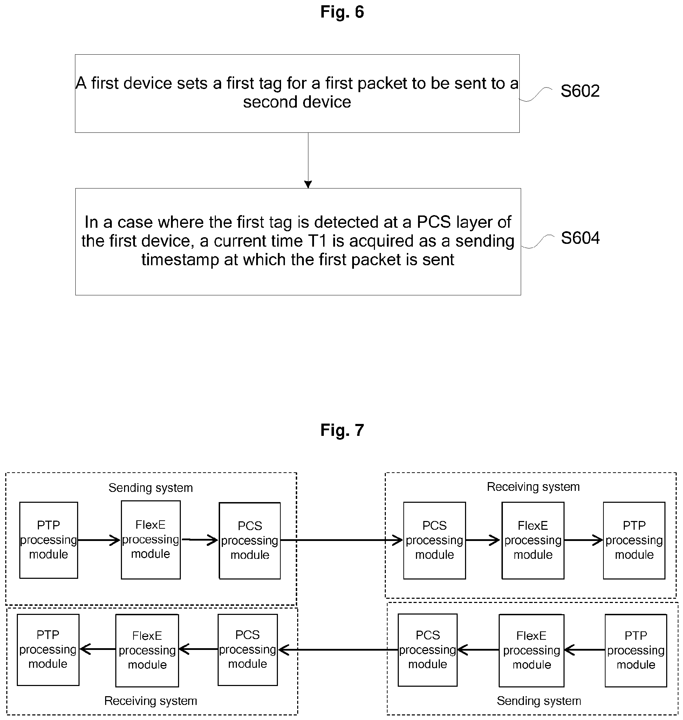

In the present embodiment, a time synchronization method running on the communication device is provided. Fig. 6 is a flowchart of a timestamp acquisition method according to some embodiments of the present disclosure. As shown in Fig. 6, the flow includes the following operations.

At S602, a first device sets a first tag for a first packet to be sent to a second device.

At S604, in a case where the first tag is detected at a PCS layer of the first device, a current time T1 is acquired as a sending timestamp at which the first packet is sent.

The first packet and the second packet of the present disclosure may be Point To Point (PTP) packets.

Through the above operations, the first device sets a first tag for a first packet to be sent to the second device; and in a case where the first tag is detected at a PCS layer of the first device, the current time T1 is acquired as the sending timestamp at which the first packet is sent. By virtue of the technical solution, the position where a timestamp of the first packet is provided is lowered into the PCS layer, and timestamp processing is performed at the PCS layer, thereby greatly reducing uncertain subsequent time delays. The solution can solve the problem of low accuracy of a timestamp determination scheme in the related art, greatly improve the accuracy of timestamp processing, and improve the time synchronization accuracy of the system.

In some exemplary implementations, the operation that the first device sets the first tag for the first packet to be sent to the second device may be implemented in the following manner. The first device constructs the first packet in a FlexE overhead block format, wherein the FlexE overhead block format is 8*66bit; and a first 66bit of a first overhead block of the first packet is marked with the first tag.

In some exemplary implementations, after the first 66bit of the first overhead block of the first packet is marked with the first tag, the first tag is transmitted by adding a signal line.

In some exemplary implementations, the first packet is a FollowUp packet.

In some exemplary implementations, after the current time T1 is acquired as the sending timestamp at which the first packet is sent in a case where the first tag is detected at the PCS layer of the first device, the method includes one of the following operations: the time T1 is added in a Sync packet and the Sync packet is sent to the second device, wherein the first packet is the Sync packet; or, after the first packet is sent, the time T1 is sent to the second device through a FollowUp packet.

According to some other embodiments of the present disclosure, a timestamp acquisition method is provided, which includes the following operations.

At operation 1, a second device receives a first packet sent by a first device. The first packet is in a FlexE overhead block format.

At operation 2, a time T2 at which a PCS layer of the second device receives the first 66bit of the first overhead block of the first packet is recorded, and the time T2 is determined as a receiving timestamp at which the first packet is received.

Through the above operations, the position where a timestamp of the first packet is provided is lowered into the PCS layer, and timestamp processing is performed at the PCS layer, thereby greatly reducing uncertain subsequent time delays. The solution can solve the problem of low accuracy of a timestamp determination scheme in the related art, greatly improve the accuracy of timestamp processing, and improve the time synchronization accuracy of the system.

In some exemplary implementations, the operation that the second device receives the first packet sent by the first device further includes one of the following operations:
the second device receives a sending timestamp T1 of the first packet in the first packet; or after receiving the first packet, the second device receives a sending timestamp T1 of the first packet in a FollowUp packet.

Another embodiment of the present disclosure is provided below for illustration.

A PTP packet with a general high accuracy in the related art is generated at a MAC layer, and the timestamp is obtained at the MAC layer. Due to a series of processing performed at the FlexE layer and the PCS layer after the MAC layer, uncertain factors such as a link delay, a link difference, or an FIFO cache delay are introduced. If the position where the timestamp is acquired is prior to the layer where these uncertain delays are introduced, the accuracy of the timestamp will be greatly reduced.

The embodiment of the present disclosure provides a method for lowering the position where a FlexE timestamp is acquired into the PCS layer. Through the timestamp processing at the PCS layer, the accuracy of the timestamp processing is greatly improved, and the time synchronization accuracy of the system is improved.

The embodiment of the present disclosure provides a high-accuracy time transfer method applicable to a FlexE interface, which may be applied to the following system. A complete minimum system consists of two devices, each of which consists of a sending system and a receiving system. Fig. 7 is a structure diagram of a sending system and a receiving system according to some embodiments of the present disclosure. As shown in Fig. 7, the sending system and the receiving system are each divided into key modules such as a PTP processing module, a FlexE processing module, and a PCS processing module.

The PTP processing module is located above the MAC layer, and is responsible for the generation and termination of the PTP packet.

The FlexE processing module is at the Shim layer of FlexE, and is responsible for the service and overhead processing of FlexE.

The PCS processing module is located at the PCS layer, and is responsible for identifying the PTP packet and generating the timestamp.

The processing in a sending direction includes the following operations.

At S11, at a sender, the PTP processing module is responsible for constructing a complete PTP packet in an ETH format, converting the PTP packet into a FlexE overhead block format of 8*66bit shown in Fig. 4, and sends the converted packet to the FlexE overhead processing module. Because one overhead block may not be enough for bearing the PTP packet, the PTP packet may be split into multiple FlexE overhead blocks for transfer. Each overhead block is sent separately to the FlexE processing module.

At S12, the FlexE module splits the 8*66bit overhead block inserted by the PTP module into multiple 66bit blocks and inserts the 66bit blocks into the PHY according to the standard processing principle of the FlexE Shim layer. In order to lower the position where the timestamp is processed, the FlexE module needs to carry out a special processing in addition to the standard processing flow: when receiving the first overhead block carrying the PTP packet transferred by the PTP module, the FlexE module tags the first 66bit block of this first overhead block, and the tag is transferred to the PCS layer of the PHY as a channel associated signal. The tag may be transferred by adding a signal line or in other ways.

At S13, after the 66bit block carrying a channel associated tag is detected at the PCS layer, timestamp information at which the 66bit block is sent at the PCS layer is recorded as the sending timestamp of the PTP packet. If a one-step method is used, the timestamp information is added directly into the corresponding PTP packet. If a two-step method is used, the PCS layer returns the timestamp information to the PTP processing module for subsequent processing. The timestamp information recorded at the PCS layer is the real timestamp close to the physical layer, and subsequent processing basically has no jitter delay.

At S14, when the one-step method is used, each PTP packet is sent independently by repeating the above operation, and the timestamp is collected and added at the PCS layer.

At S15, when the two-step method is used, when sending the subsequent FollowUp packet, the PTP processing module adds the timestamp information into the FollowUp packet as the timestamp t1, and then sends the FollowUp packet to the peer device in the above way.

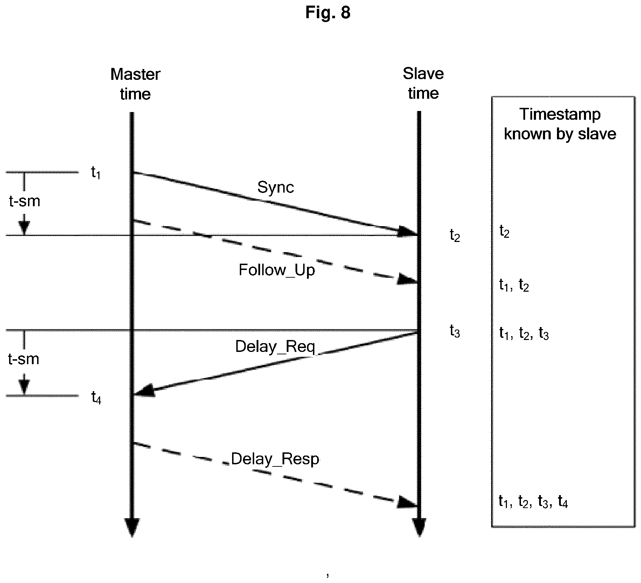

At S16, when the peer end feeds back a Delay_Req packet, the same operations as the above S11 to S13 are performed, as shown in the Fig. 8.

At S17, by setting a tag in the FlexE layer and recording the timestamp at the PCS layer, the position where the timestamp is acquired can be lowered at the sender, and the accuracy of the timestamp can be improved.

The processing in a receiving direction includes the following operations.

At S21, when performing the processing of the PCS layer, a receiver records the timestamp information for each 66bit block received.

At S22, the received timestamp information of the 66bit block is uploaded in a channel associated manner to the FlexE processing module.

At S23, the FlexE processing module terminates a PTP packet slice in overhead information and uploads the timestamp information of the first 66bit of the first overhead block where the PTP packet is located to the PTP processing module.

At S24, the PTP processing module receives all the PTP packet slices, splices the PTP packet slices to obtain the PTP packet, and takes the timestamp information carried by the first slice of the PTP packet as receiving timestamp information of this packet.

At S25, for a one-step method, S21 to S23 are repeated for each packet; and for a two-step method, the receiver extracts the corresponding timestamp information from the FollowUp packet as the receiving timestamp information t1.

In this way, the insertion and extraction of the timestamp of the packet can be realized at the PCS layer, thereby improving the accuracy of time processing.

An example of FlexE high-accuracy time processing performed according to the two-step method of E2E in a BC-BC model is explained below. Fig. 8 is a time information interaction diagram of E2E according to some embodiments of the present disclosure. As shown in Fig. 8, in the sending direction of a Master, the following operations are included.

At S31, the PTP processing module constructs a Sync packet, and sends the Sync packet to the FlexE processing module by splitting the Sync packet into multiple 8*66bit block structures of FlexE.

At S32, the FlexE processing module detects overhead insertion information from the PTP module, and when receiving the first 66bit of the first overhead block carrying the Sync packet, sets a tag for the 66bit block and sends the 66bit block and the channel associated tag to the PCS layer.

At S33, after the 66bit block carrying the channel associated tag is detected at the PCS layer, the corresponding sending timestamp information t1 is recorded, the Sync packet is sent to a Slave, and the recorded timestamp information is returned to the PTP packet processing module. In some exemplary implementations, if the one-step method is used, the timestamp information is directly added to the Sync packet.

At S34, the PTP module records the timestamp information, adds the timestamp information, namely the time t1, into the FollowUp packet when sending the next FollowUp packet, and then sends the packet to the peer receiver in the above way, so as to implement two-step sending processing.

The receiving processing at a Slave includes the following operations.

At S41, when performing the processing of the PCS layer, the Slave receiver records the timestamp for each 66bit block received.

At S42, the received timestamp information of the 66bit block is uploaded in a channel associated manner to the FlexE overhead processing module.

At S43, after receiving 8*66bit overhead information, namely the complete FlexE overhead multi-frame, the overhead processing module uploads the FlexE overhead multi-frame to the PTP processing module together with the timestamp information of the first 66bit block of the overhead block.

At S44, the PTP module splices multiple FlexE overheads, and after identifying the Sync packet, records the receiving timestamp information of the first overhead block where the Sync packet is located as the time t2. After identifying the FollowUp packet, the PTP module records the receiving timestamp information of the first overhead block where the FollowUp packet is located as the time t1.

At S45, the Slave sends a reply packet, namely the Delay_Req packet, in a flow similar to the flow for sending the Sync packet by the Master, the first 66bit block of the first overhead block of the Delay_Req packet carrying the channel associated tag is identified at the PCS layer, and the timestamp information is recorded and sent by the PCS layer to the PTP module. The PTP packet records the timestamp information as the time t3.

The receiving processing at the Master includes the following operations.

At S51, when performing the processing of the PCS layer, the Master receiver records the timestamp for each 66bit block received.

At S52, the received timestamp information of the 66bit block is uploaded in a channel associated manner to the FlexE overhead processing module.

At S53, after receiving the 8*66bit overhead information, namely the complete FlexE overhead multi-frame, the overhead processing module uploads the complete FlexE overhead multi-frame to the PTP processing module together with the timestamp information of the first 66bit block of the overhead block.

At S54, the PTP module splices multiple FlexE overheads, and after identifying the Delay_Req packet, records the receiving timestamp information of the first overhead block where the Delay_Req packet is located as the time t4.

At S55, the Master sends a reply packet, namely a Delay_Resp packet, adds the time t4 timestamp information recorded before into the Delay_Resp packet, and sends the packet to the Slave by means of the sending process.

The receiving processing at the Slave includes the following operations.

At S61, the Slave repeats the previous receiving process.

At S62, after the PTP module receives the Delay_Resp packet and extracts the timestamp T4 from the Delay_Resp packet, the Slave can calculate a time offset relative to the Master by using the formula known

$$T_{Offset} = \frac{(T_2 - T_1) - (T_4 - T_3)}{2}$$

in the industry, thereby realizing the adjustment of time accuracy between the Master and the Slave.

In the above way, the accuracy of a single device can reach 5ns, which greatly improves the time synchronization accuracy of the device.

Through the description of the above implementations, those having ordinary skill in the art can understand that the method according to the above embodiment may be implemented by means of software plus a necessary general hardware platform, and of course, may also be implemented through hardware, but in many cases, the former is a better implementation. Based on such understanding, the essence of technical solution of the embodiments of the present disclosure, or in other words, the part of the technical solutions making contributions to the conventional art, may be embodied in the form of a software product stored in a storage medium (such as a Read-Only Memory (ROM)/Random Access Memory (RAM), a magnetic disk and an optical disc), including a number of instructions for enabling a terminal device (which may be a mobile phone, a computer, a server, or a network device, etc.) to perform the methods described in various embodiments of the present disclosure.

Second Embodiment

In the present embodiment, a timestamp acquisition device is provided. The device is used to implement the above embodiments and exemplary implementations, and the details having been described will not be repeated. As used below, the term "module" may implement a combination of software and/or hardware of a predetermined function. Although the device described in the following embodiments is preferably implemented in software, the implementation in hardware or a combination of software and hardware is also possible and contemplated.

According to some other embodiments of the present disclosure, a timestamp acquisition device is provided, which is applied to the first device and includes a setting module and an acquiring module.

The setting module is configured to set a first tag for a first packet to be sent to the second device.

The acquiring module is configured to acquire, in a case where the first tag is detected at a PCS layer of the first device, a current time T1 as a sending timestamp at which the first packet is sent.

By using the above solution, the problem of low accuracy of a timestamp determination scheme in the related art is solved, the accuracy of timestamp processing is greatly improved, and the time synchronization accuracy of the system is improved.

According to some other embodiments of the present disclosure, a timestamp acquisition device is provided, which is applied to the second device and includes a receiving module and a recording module.

The receiving module is configured to receive a first packet sent by the first device. The first packet is in a FlexE overhead block format.

The recording module is configured to record a time T2 at which a PCS layer of the second device receives a first 66bit of a first overhead block of the first packet, and determine the time T2 to be the receiving timestamp at which the first packet is received.

By using the above solution, the problem of low accuracy of a timestamp determination scheme in the related art is solved, the accuracy of timestamp processing is greatly improved, and the time synchronization accuracy of the system is improved.

It is to be noted that each of the above modules may be implemented by software or hardware. For the latter, the modules may be implemented by, but not limited to, either of the following manners: the above modules are all located in the same processor; or, the above modules are located in different processors in any combination form respectively.

Third Embodiment

According to some other embodiments of the present disclosure, a time synchronization system is provided, which includes a first device and a second device.

The first device is configured to set a first tag for a first packet to be sent to the second device, and in a case where the first tag is detected at a PCS layer of the first device, determine a current time t1 and feeds back the time t1 to the second device.

The second device is configured to receive the first packet sent by the first device, and determine a time t2 at which the first packet is received.

The second device is configured to set a second tag for a second packet to be sent to the first device, and in a case where the second tag is detected at a PCS layer of the second device, determine a current time t3.

The first device is configured to receive the second packet, determine a time t4 at which the second packet is received and feed back the time T4 to the second device.

The second device is configured to perform time synchronization according to the time t1, the time t2, the time t3 and the time t4.

In some exemplary implementations, a way of setting the first tag or the second tag includes the following operations.

A third packet to be sent to the peer end is constructed in a FlexE overhead block format. The FlexE overhead block format is 8*66bit.

A first 66bit of a first overhead block of the third packet is marked with the first tag or the second tag.

Embodiment 4

The embodiments of the present disclosure provide a storage medium. In an exemplary embodiment, the storage medium may be set to store program codes for performing the following operations.

At S1, a first device sets a first tag for a first packet to be sent to a second device.

At S2, in a case where the first tag is detected at a PCS layer of the first device, a current time T1 is acquired as a sending timestamp at which the first packet is sent.

In an exemplary embodiment, the storage media include, but are not limited to, a USB flash disk, an ROM, an RAM, a mobile hard disk, a magnetic disk, a compact disc, and other media capable of storing the program codes.

The embodiments of the present disclosure provide an electronic device, which includes a memory and a processor. The memory stores a computer program. The processor is configured to run the computer program, so as to perform operations in any of the above method embodiments.

In some exemplary implementations, the electronic device may further include a transmission device and an input and output device. The transmission device is connected with the processor, and the input and output device is connected with the processor.

In some exemplary implementations of the present embodiment, the processor may be configured to execute the following operations through the computer program.

At S1, a first device sets a first tag for a first packet to be sent to a second device.

At S2, in a case where the first tag is detected at a PCS layer of the first device, a current time T1 is acquired as a sending timestamp at which the first packet is sent.

The specific examples in the present embodiment may refer to the examples described in the above embodiments and exemplary embodiments.

The specific examples in the present embodiment may refer to the examples described in the above embodiments and alternative embodiments.

It is apparent that a person skilled in the art shall understand that all of the above-mentioned modules or operations in the present disclosure may be implemented by using a general computation apparatus, may be centralized on a single computation apparatus or may be distributed on a network composed of multiple computation apparatuses. Optionally, they may be implemented by using executable program codes of the computation apparatuses. Thus, they may be stored in a storage apparatus and executed by the computation apparatuses, the shown or described operations may be executed in a sequence different from this sequence under certain conditions, or they are manufactured into each integrated circuit module respectively, or multiple modules or operations therein are manufactured into a single integrated circuit module. Thus, the embodiments of the present disclosure are not limited to any specific hardware and software combination.

The above is only the exemplary embodiments of the present disclosure, not intended to limit the present disclosure. As will occur to those having ordinary skill in the art, the present disclosure is susceptible to various modifications and changes. Any modifications, equivalent replacements, improvements and the like made within the principle of the present disclosure shall fall within the scope of protection of the present disclosure.

**Claims**

1. A timestamp acquisition method, comprising:

   setting, by a first device, a first tag for a first packet to be sent to a second device; and
   in a case where the first tag is detected at a Physical Coding Sublayer, PCS, layer of the first device, acquiring a current time T1 as a sending timestamp at which the first packet is sent.

2. The method according to claim 1, wherein setting, by the first device, the first tag for the first packet to be sent to the second device comprises:

   constructing, by the first device, the first packet in a Flex Ethernet, FlexE, overhead block format, wherein the FlexE overhead block format is 8*66bit; and
   marking a first 66bit of a first overhead block of the first packet with the first tag.

3. The method according to claim 2, wherein after marking the first 66bit of the first overhead block of the first packet with the first tag, the method further comprises:
   transmitting the first tag by adding a signal line.

4. The method according to claim 1, wherein after acquiring the current time T1 as the sending timestamp at which the first packet is sent in the case where the first tag is detected at the PCS layer of the first device, the method comprises one of the following:

   adding the time T1 in a Sync packet and sending the Sync packet to the second device, wherein the first packet is the Sync packet;
   or,
   after sending the first packet, sending the time T1 to the second device through a FollowUp packet.

5. A timestamp acquisition method, comprising:

   receiving, by a second device, a first packet sent by a first device, wherein the first packet is in a Flex Ethernet, FlexE, overhead block format; and
   recording a time T2 at which a Physical Coding Sublayer, PCS, layer of the second device receives a first 66bit of a first overhead block of the first packet, and determining the time T2 as a receiving timestamp at which the first packet is received.

6. The method according to claim 5, wherein receiving, by the second device, the first packet sent by the first device further comprises one of the following:

   receiving, by the second device, a sending timestamp T1 of the first packet in the first packet; or
   after receiving the first packet, receiving, by the second device, a sending timestamp T1 of the first packet in a FollowUp packet.

7. A time synchronization system, comprising a first device and a second device, wherein

   the first device is configured to set a first tag for a first packet to be sent to the second device, and in a case where the first tag is detected at a Physical Coding Sublayer, PCS, layer of the first device, determine a current time t1 and feed back the time t1 to the second device;
   the second device is configured to receive the first packet sent by the first device, and determine a time t2 at which the first packet is received;
   the second device is configured to set a second tag for a second packet to be sent to the first device, and in a case where the second tag is detected at a PCS layer of the second device, determine a current time t3;
   the first device is configured to receive the second packet, determine a time t4 at which the second packet is received and feed back the time t4 to the second device; and
   the second device is configured to perform time synchronization according to the time t1, the time t2, the time t3 and the time t4.

8.  The system according to claim 7, wherein a way of setting the first tag or the second tag comprises:

    constructing a third packet to be sent to a peer end in a Flex Ethernet, FlexE, overhead block format, wherein the FlexE overhead block format is 8*66bit; and
    marking a first 66bit of a first overhead block of the third packet with the first tag or the second tag.

9.  A storage medium, storing a computer program, wherein the computer program is configured to execute, at runtime, the method according to any one of claims 1 to 6.

10. An electronic device, comprising a memory and a processor, wherein the memory stores a computer program, and the processor is configured to run the computer program to execute the method according to any one of claims 1 to 6.

Fig. 1

**Fig. 2**

EP 3 890 218 A1

**Fig. 3**

EP 3 890 218 A1

# Fig. 4

Bit Position

| Block | SH | 0 1 2 3 4 5 6 7 8 9 10 11 12 13 14 15 16 17 18 19 20 21 22 23 24 25 26 27 28 29 30 31 32 33 34 35 36 37 38 39 40 41 42 43 44 45 46 47 48 49 50 51 52 53 54 55 56 57 58 59 60 61 62 63 |
|---|---|---|
| 1 | 1 0 | 0x48 | C | OMF | RPF | Prs | FlexE Group Number | 0x5 | 0x000_0000 |
| 2 | 0 1 | C | PHY Map | PHY Number | Reserved |
| 3 | 0 1 | C | Client Calendar A | Client Calendar B | CR | CA | Reserved | CRC_16 |
| 4 | S S | Management Channel Section (Two 66B blocks) |
| 5 | S S | |
| 6 | S S | Management Channel-Shim to Shim (Three 66B blocks) |
| 7 | S S | |
| 8 | S S | |

16 FlexE Overhead Frames

| 0 | PHY Map(0-7) | Client carried Calendar A slot 0 | Client carried Calendar B slot 0 |
| 0 | PHY Map(8-15) | Client carried Calendar A slot 1 | Client carried Calendar B slot 1 |
| | ••• | ••• | ••• |
| 0 | PHY Map(120-127) | Client carried Calendar A slot 15 | Client carried Calendar B slot 15 |
| 1 | PHY Map(128-135) | Client carried Calendar A slot 16 | Client carried Calendar B slot 16 |

16 FlexE Overhead Frames

| | ••• | ••• | ••• |
| 1 | PHY Map(151-159) | Client carried Calendar A slot 19 | Client carried Calendar B slot 19 |
| 1 | PHY Map(160-167) | Reserved | Reserved |
| | ••• | ••• | ••• |
| 1 | PHY Map(248-255) | Reserved | Reserved |

C = Calendar configuration in use (See 7.3.2)

OMF = Overhead Multiframe Indicatior (See 7.3.1)

C = Calendar configuration in use (See 7.3.2)

RPF = Remote PHY Fault (See 7.3.8)

CR = Calendar Switch Request (See 7.3.4)

CA = Calendar Switch Acknowledge (See 7.3.4)

Ss= Valid sync header bits (01 or 10)

PHY Map= Control of which PHY's are members of this group (See 7.3.3)

PHY Number = Identity of this PHY within the group (See 7.3.3)

FlexE Group Number (See 7.3.6)

Client(being progammed) (See 7.3.4)

Reserved (See 7.3.7)

Management Channels (See 7.3.5)

CRC-16 (See 7.3.8)

**Fig. 5**

## Fig. 6

A first device sets a first tag for a first packet to be sent to a second device — S602

In a case where the first tag is detected at a PCS layer of the first device, a current time T1 is acquired as a sending timestamp at which the first packet is sent — S604

## Fig. 7

**Fig. 8**

## INTERNATIONAL SEARCH REPORT

| International application No. |
| --- |
| **PCT/CN2019/113735** |

### A. CLASSIFICATION OF SUBJECT MATTER

H04J 3/06(2006.01)i; H04J 14/02(2006.01)i; H04L 7/00(2006.01)i

According to International Patent Classification (IPC) or to both national classification and IPC

### B. FIELDS SEARCHED

Minimum documentation searched (classification system followed by classification symbols)

H04J; H04L

Documentation searched other than minimum documentation to the extent that such documents are included in the fields searched

Electronic data base consulted during the international search (name of data base and, where practicable, search terms used)

CNABS, CNTXT, CNKI, VEN, USTXT, EPTXT, 3GPP: 获取, 时间戳, 时钟, 同步, 设备, 报文, 标记, 物理编码子层, PCS, 当前, 时刻, 灵活以太网技术, 开销; obtain, time stamp, clock, synchron+, device, message, mark, physical coding sub?layer, current, time, FlexE, overhead

### C. DOCUMENTS CONSIDERED TO BE RELEVANT

| Category* | Citation of document, with indication, where appropriate, of the relevant passages | Relevant to claim No. |
| --- | --- | --- |
| Y | CN 107528654 A (ZTE CORPORATION) 29 December 2017 (2017-12-29) description, paragraphs [0041]-[0082], and figures 1-6 | 1-10 |
| Y | CN 108880722 A (SHENZHEN ZTE SOFTWARE CO., LTD.) 23 November 2018 (2018-11-23) description, paragraphs [0031]-[0128], and figures 1-11 | 1-10 |
| Y | CN 103812592 A (NANJING UNIVERSITY OF AERONAUTICS AND ASTRONAUTICS) 21 May 2014 (2014-05-21) description, paragraphs [0069]-[0084] | 7, 8 |
| A | CN 108155982 A (ZTE MICROELECTRONICS TECHNOLOGY CO., LTD.) 12 June 2018 (2018-06-12) entire document | 1-10 |
| A | US 2014226683 A1 (SILICOM LTD.) 14 August 2014 (2014-08-14) entire document | 1-10 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **08 January 2020** | **19 January 2020** |

| Name and mailing address of the ISA/CN | Authorized officer |
| --- | --- |
| **China National Intellectual Property Administration (ISA/CN)** **No. 6, Xitucheng Road, Jimenqiao Haidian District, Beijing 100088** **China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2019/113735**

| Patent document cited in search report | | | Publication date (day/month/year) | Patent family member(s) | | | Publication date (day/month/year) |
|---|---|---|---|---|---|---|---|
| CN | 107528654 | A | 29 December 2017 | WO | 2017219881 | A1 | 28 December 2017 |
| CN | 108880722 | A | 23 November 2018 | | None | | |
| CN | 103812592 | A | 21 May 2014 | CN | 103812592 | B | 13 July 2016 |
| CN | 108155982 | A | 12 June 2018 | WO | 2018099048 | A1 | 07 June 2018 |
| US | 2014226683 | A1 | 14 August 2014 | | None | | |

Form PCT/ISA/210 (patent family annex) (January 2015)